Europäisches Patentamt

(19) European Patent Office    (11) Veröffentlichungsnummer: **0 152 504**

Office européen des brevets    **B1**

(12) **EUROPÄISCHE PATENTSCHRIFT**

(45) Veröffentlichungstag der Patentschrift:    (51) Int. Cl.⁴: **B 41 J 17/28,** B 65 H 23/02
04.11.87

(21) Anmeldenummer: **84101836.9**

(22) Anmeldetag: **22.02.84**

(54) Farbtuch-Korrektureinrichtung für Drucker.

(43) Veröffentlichungstag der Anmeldung:    (73) Patentinhaber: **IBM DEUTSCHLAND GMBH,**
28.08.85 Patentblatt 85/35    **Pascalstrasse 100, D-7000 Stuttgart 80 (DE)**
    (84) Benannte Vertragsstaaten: **DE**

(45) Bekanntmachung des Hinweises auf die Patenterteilung:    (73) Patentinhaber: **International Business Machines**
04.11.87 Patentblatt 87/45    **Corporation, Old Orchard Road, Armonk, N.Y.**
    **10504 (US)**
    (84) Benannte Vertragsstaaten: **FR GB**

(84) Benannte Vertragsstaaten:
**DE FR GB**
    (72) Erfinder: **Hilpert, Fritz, Lichtensteinstrasse 4,**
    **D-7030 Böblingen (DE)**

(56) Entgegenhaltungen:
US-A-3 608 796    (74) Vertreter: **Blutke, Klaus, Dipl.- Ing., Schönaicher**
US-A-3 776 442    **Strasse 220, D-7030 Böblingen (DE)**

**IBM TECHNICAL DISCLOSURE BULLETIN, Band 11,**
**Nr. 6, November 1968, Seite 649, New York, USA;**
**T.B. BARNA: "Tape tracking guide"**
**TECHNICAL DIGEST - WESTERN ELECTRIC, Nr. 47,**
**Juli 1977, Seite 5; J.L. DE BOO et al.: "Paper**
**straightener and guide"**

## Beschreibung

Die Erfindung betrifft eine Farbtuch-Korrektureinrichtung für Drucker der im Oberbegriff des Anspruches 1 bezeichneten Art.

Die Ursache für ein Schräglaufen eines Druckerfarbtuchs kann darin gesehen werden, daß die das Farbtuch aufnehmenden Walzen eine Konizität aufweisen, daß das Umschaltglied für die Änderung der Transportrichtung, welches oftmals als Leiste ausgebildet ist, keine achsparallele Lage zur Walze einnimmt und vor allem, daß durch örtlich unterschiedliche Beaufschlagung des Farbtuchs mit Typen Spannungen im Band erzeugt werden.

Es ist auch bekannt (IBM-Drucker 1403), den Schräglauf eines Farbtuchs zu korrigieren. Zu diesem Zwecke hat man den Achsen der beiden das Farbtuch aufnehmenden Walzen eine Schränkung verliehen, so daß das Farbtuch bestrebt ist, immer nach einer Seite zu laufen. An der anderen Seite ist ein zyklisch in die Farbtuchtransportbahn bewegbarer Abfühlhebel angeordnet, der anzeigt, ob er auf das Farbtuch auftrifft oder nicht. Diese Anzeige wird über einen ziemlich aufwendigen Mechanismus auf eine Korrekturrolle übertragen, d.h. bei einem Auftreffen des Abfühlhebels auf ein Farbtuch wird die Korrekturrolle gegen das Farbtuch gedrückt. In bezug auf die Laufrichtung des Farbtuchs ist diese Korrekturrolle derart schräg gestellt, daß das Farbtuch entgegengesetzt zur Schräglaufrichtung verschoben wird. Diese Schrägstellung der Korrekturrolle ist während des Betriebes unveränderbar und kann nur zu Beginn des Betriebes von Hand aus justiert werden. Da die Korrekturwirkung der schräggestellten Korrekturrolle abhängig ist von verschiedenen Faktoren, die sich jedoch verändern können, muß die Schrägstellung der Korrekturrolle nachjustierbar sein. Diese Nachjustierung ist zweifellos sehr nachteilig. Außerdem macht sich der ziemlich aufwendige, die Anzeige des Abfühlhebels auf die Korrekturrolle auf- und abbewegende Vorrichtung übertragende Mechanismus als nachteilig bemerkbar, da eine relativ große Masse zu bewegen ist, die ihrerseits den Farbtuchrand sehr beansprucht, so daß Beschädigungen desselben eintreten können.

In dem deutschen Patent 19 32 020 ist eine Transportvorrichtung mit Schräglaufkorrektur für ein Farbtuch angegeben, die frei ist von den beschriebenen Nachteilen der vorstehend genannten Schräglaufkorrekturvorrichtung, und die nicht wie bei der bekannten Schräglaufkorrekturvorrichtung eine Korrektur beim Transport des Farbtuchs in nur einer Richtung ermöglicht, sondern in beiden Transportrichtungen, wobei trotz des Vorsehens nur eines einzigen Elektromotors für den Transport des Farbtuchs, das Umschalten der Transportrichtung und das Korrigieren des Schräglaufes die beiden Farbtuchwalzen für ihr Auswechseln so weit wie möglich ungehindert zugänglich sein sollen.

Diese Vorrichtung korrigiert den Schräglauf eines Farbtuchs vollautomatisch, d.h. es erfolgt auch nach einer selbsttätigen Transportrichtungsumkehr eine selbsttätige Umkehrung der Korrekturrichtung für das Farbtuch. Durch den Aufbau der Vorrichtung sind die beiden Farbtuchwalzen an ihrer, der Druckvorrichtung abgewandten Seite durch keinen einzigen Teil der Vorrichtung verdeckt, so daß das Auswechseln der Farbtuchwalzen äußerst bequem erfolgen kann. Die freie Zugänglichkeit zu den Farbtuchwalzen ist dadurch gewährleistet, daß der Antrieb für den Mechanismus zum Schränken der Achsen der beiden Walzen über das Farbtuch selbst erfolgt, so daß eine separate Kraftübertragung von der einen Stirnseite der beiden Walzen, an der die Transportrichtungsumkehr gesteuert wird, auf die andere Stirnseite der Farbtuchwalzen, an welcher der Schräglauf durch ein Schränken der Achsen der beiden Walzen korrigiert wird, vermieden ist.

Jedoch weist diese im deutschen Patent 19 32 020 angegebene Vorrichtung immer noch den Nachteil auf, daß das Farbtuch immer, auch wenn es nicht nötig wäre, in eine der beiden Korrekturrichtungen gezwungen wird. Die Korrektur erfolgt in Richtung der Belastung (Typenbandlaufrichtung) schnell, entgegengesetzt langsam. Das Maß der Korrektur ist unbestimmt, da die Tuchwickel auf den Achsen nicht unbedingt zylindrisch bleiben (lose oder fest, nur einseitig beschrieben).

Es ist deshalb Aufgabe der Erfindung, eine Farbtuch-Korrekturvorrichtung anzugeben, bei der das Farbtuch bedarfsgebunden und unabhängig von mechanischen bzw. geometrischen Besonderheiten (Wickel, Achsparallelität usw.) korrigiert wird.

Diese Aufgabe der Erfindung wird durch die im kennzeichnenden Teil des Anspruches 1 angegebenen Maßnahmen gelöst.

Vorteilhafte Weiterbildungen der Erfindung sind dem Unteranspruch zu entnehmen.

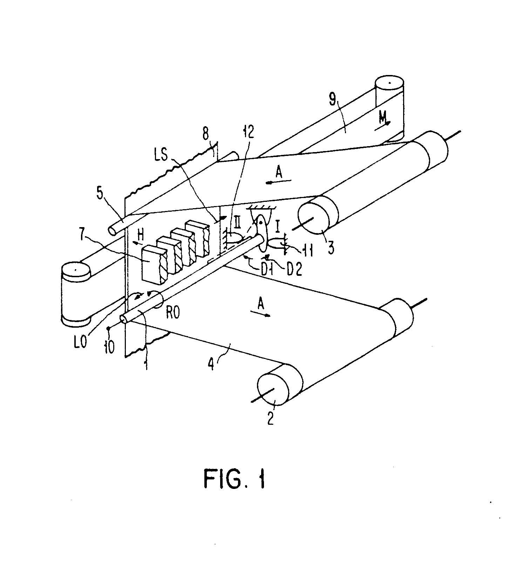

Ein Ausführungsbeispiel der Erfindung ist in Fig. 1 dargestellt und wird im folgenden näher beschrieben.

Fig. 1 zeigt eine schematische perspektivische Darstellung der erfindungsgemäßen Farbtuch-Korrektureinrichtung, bestehend aus einer Aufwickel- und einer Abwickelrolle für das Farbtuch und einer einseitig schwenkbaren Schwenkrolle, über die das Farbtuch verläuft.

In der Fig. 1 ist die Abwickelrolle mit 3 und die Aufwickelrolle für das Farbband 4 mit 2 bezeichnet. Zwischen einer Umlenkrolle 5 für das Farbtuch und einer Steuerrolle 1, die auch als Umlenkrolle fungiert, liegt der Druckbereich. Vor dem Farbtuch sind die Druckhämmer 7 einer Druckhammerbank angeordnet. Die Druckrichtung der Hämmer ist mit dem Pfeil H gekennzeichnet. Hinter dem Farbtuch liegt der Aufzeichnungsträger 8 und der in Richtung M umlaufende Typenträger 9 (z. B. ein Stahlband).

Aus Vereinfachungsgründen sind die Achsen der Rollen 2 und 3 nur durch einen einfachen Strich angedeutet. Ihre Lagerung erfolgt in herkömmlicher Weise, auf entsprechende Einzelheiten wird deshalb hier nicht näher eingegangen.

Die Schwenkrolle 1 ist mit ihrem freien Ende in Pfeilrichtung D1 bzw. D2 schwenkbar. Ihre Schwenkpositionen sind mit I bzw. II gekennzeichnet. Die Schwenkung erfolgt jeweils bis zu einem der Anschläge 11 bis 12.

An ihrem anderen Ende ist die Schwenkrolle 1 mit ihrer als Strich angedeuteten Achse mit einem Schwenkpunkt 10 verbunden. Ein solcher Schwenkpunkt kann in herkömmlicher Weise, z. B. durch ein Pendel-Kugellager, realisiert werden. Die Schwenkrolle kann entweder durch Farbtuchmitnahme bedingt um ihre Achse rotieren; sie kann aber auch durch entsprechende Feststellung an dieser Rotationsbewegung gehindert werden.

Die Achsen der Rollen 2 und 3 verlaufen parallel zueinander. Die Schwenkrolle 1 wird zweckmäßigerweise an einer Stelle in der Nähe des Druckbereiches angebracht, an denen das Farbtuch eine Umlenkung erfährt. An einer solchen Stelle entfaltet die Schwenkrolle ihre größte Wirksamkeit. Das Farbtuch wird bei seiner Bewegung, z. B. in Pfeilrichtung A, über diese Schwenkrolle 1 geführt. Dabei berührt das Farbtuch die Schwenkrolle und kann sie zu einer Rotation anregen. Die Rotation der Schwenkrolle kann durch äußere Maßnahmen unterbunden werden. Im letzteren Fall soll künftig von einer sog. nichtrotierenden Schwenkrolle gesprochen werden. Die Achse der Steuerrolle in einer gedachten Position ihres freien Schwenkendes zwischen den Anschlägen 11 und 12 verläuft in etwa parallel zu den Achsen der Rollen 2 und 3. Die Schwenkrolle kann durch verschiedene herkömmliche Maßnahmen am Rotieren gehindert werden, z. B. durch einen schwenkpunktgelagerten Elektromagneten, der sich bei Erregung auf ein entsprechend aus Eisen hergestelltes Teil der Schwenkrolle zubewegt und durch magnetische Anziehung diesebe am weiteren Rotieren hindert.

Durch die Bewegungsrichtung des Farbtuches in Pfeilrichtung A wird die Schwenkrolle 1 (egal ob rotierend oder nichtrotierend) in Pfeilrichtung D2 bis zum Anschlag 11 in die Position I geschwenkt. Im nichtrotierenden Zustand der Schwenkrolle 1 wird das Farbtuch besonders im Bereich des freien Endes der Schwenkrolle elastisch über dieselbe gleiten.

Eine Farbtuchkorrektur wird erst erforderlich, wenn das Farbtuch eine seitliche Auslenkung in Pfeilrichtung LS erfährt. Diese seitliche Auslenkung kommt dadurch zustande, daß bei der Verwendung eines Farbtuches in Zeilendruckern mit umlaufenden Typenträgern, z. B. Typenbänder, welche sich ebenfalls in Richtung LS bewegen sollen, während des Anschlages der Druckhämmer das Farbtuch in Richtung LS durch Mitnahme verschoben wird. Dieser seitlichen Verschiebung des Farbtuches in Richtung LS soll nun eine durch die erfindungsgemäße Korrekturvorrichtung entgegengesetzte Komponente entgegenwirken, um die Verschiebung des Farbtuches zu kompensieren. Zur Erzeugung dieser Gegenkomponente läßt man die Schwenkrolle 1 frei in Richtung (bei einem Farbtuchvorschub in Richtung A würde die Schwenkrolle eine Drehbewegung RO ausführen) rotieren. Durch die Schrägstellung der rotierenden Schwenkrolle kommt es zur Ausbildung einer der Verschiebung LS entgegengerichteten Kraftkomponente LO auf das Farbtuch, wodurch die Verschiebung LS desselben kompensiert wird. Bei einem Umschalten der Laufrichtung des Farbtuches (bei Farbtuchende) wird der Schwenkmechanismus betätigt. Die Schwenkrolle 1 schwenkt dann aus der Position I in die Position II gegen den Anschlag 12. Die zuvor gemachten Angaben für die Position I gelten analog für die Position II. Ist keine Farbtuchkorrektur erforderlich, wird die Steuerrolle im nichtrotierenden Zustand gehalten. Bei einer erforderlichen Korrektur rotiert die Schwenkrolle 1 und erzeugt dadurch eine der Farbtuchverschiebung entgegengerichtete Komponente. Die Farbtuchkorrektur setzt eine Positionsmessung der Tuchkante voraus, welche durch allgemein bekannte und deshalb hier nicht näher erläuterte Anordnungen, z. B. eine Photozellenanordnung, durchgeführt werden kann.

Die erfindungsgemäße Korrektureinrichtung ist nicht nur durch eine konstruktive Einfachheit gekennzeichnet, es ergibt sich auch eine schnelle Reaktion des Korrekturmechanismus.

Dies ist bei Anordnungen nach dem Stand der Technik aus folgendem Grunde nicht möglich:

Die Abfühlung löst den Mechanismus zum Schwenken der Achsen aus. Die dadurch erzeugte Vorspannung des Farbtuches muß für die Korrektur abgebaut werden; die dazu benötigte Zeit ist wiederum vom Zustand der Farbtuchwickel abhängig.

Außerdem ermöglicht die Erfindung auch den Einsatz von Farbtuchkassetten, was beim Stand der Technik aus konstruktiven Gründen bisher nicht möglich war, da die achsen von Kassetten-Farbtuchrollen ortsfest sind.

Bei der nichtrotierenden Schwenkwelle 1 findet keine Korrektur statt. Nur solange eine Rotation der Schwenkwelle zugelassen wird, erfolgt eine Korrektur. Diese Art der Korrektur hat den Vorteil der sofortigen Wirksamkeit, sie ist zudem unabhängig von den Farbtuchwikkeln.

Die Korrektur erfolgt immer in der gewünschten Richtung entgegen der Bewegungsrichtung des umlaufenden Typenträgers. Bei geringerer Druckleistung wird auch nur geringfügig korrigiert. Leichte Beanspruchungen des Farbbandes beim Herübergleiten über die schräggestellte Schwenkwelle werden durch die Elastizität des Farbtuches ausgeglichen.

**Patentansprüche**

1. Farbtuch-Korrektureinrichtung für Anschlagdrucker mit quer zur Farbtuchvorschubrichtung umlaufenden Typenträgern, mit einer Auf- und Abwickelrolle für das Farbtuch, dadurch gekennzeichnet,
daß das Farbtuch (4) über eine oder mehrere um einen Drehpunkt (10) zwischen zwei Anschlägen (11, 12) schwenkbare Schwenkrolle (1) geführt ist,
daß die Schwenkrolle (1) so angeordnet ist, daß ihre Achse in etwa parallel zur Umlaufrichtung des Typenträgers verläuft und ihr freies Schwenkende in Umlaufrichtung desselben weist,
daß die Schwenkrolle (1) durch Kontakt mit dem Farbtuch (4) in Richtung des Farbtuchvorschubes bis zum Anschlag (11 oder 12) schwenkt,
daß die Schwenkrolle (1) durch Kontakt mit dem bewegten Farbtuch wahlweise frei rotieren kann,
daß zur Kompensation einer durch den Druckvorgang bedingten seitlichen Ausweichung (LS) des Farbtuches (4) in Umlaufrichtung des Typenträgers durch die Rotation der Schwenkrolle (1) eine Kraftkomponente auf das Farbtuch entgegen der seitlichen Ausweichung (LS) ausgeübt wird.

2. Anordnung nach Anspruch 1, dadurch gekennzeichnet,
daß die Schwenkrolle (1) zugleich als Umlenkrolle in der Nähe des Druckbereiches angeordnet ist.

**Claims**

1. Ribbon correction unit for impact printers with type carriers revolving transversely to the direction of ribbon advance, comprising a wind-up and wind-off roll for the ribbon,
characterized in that
the ribbon (4) is guided across one or several pivotable rollers (1) pivotable about a pivot (10) between two stops (11, 12),
the pivotable roller (1) is arranged such that its axis extends roughly parallel to the direction of revolution of the type carrier and its free pivotable end points in the direction of revolution of said type carrier,
the pivotable roller (1) by contact with the ribbon (4) is pivoted in the direction of ribbon advance up to said stop (11 or 12),
the pivotable roller (1) is optionally freely rotatable as a result of contacting the moving ribbon,
for compensating for a lateral displacement (LS) of the ribbon (4), occurring during printing in the direction of revolution of the type carrier, rotation of the pivotable roller (1) exerts a force component on the ribbon counteracting said lateral displacement (LS).

2. Unit according to claim 1, characterized in that the pivotable roller (1), simultaneously acting as a deflection roller, is positioned adjacent to the print area.

**Revendications**

1. Dispositif correcteur pour ruban encreur d'une imprimante à percussion équipée de supports de caractères sans fin circulant transversalement à la direction d'avance du ruban encreur, ainsi que d'un rouleau récepteur et d'un rouleau débiteur pour le ruban encreur, caractérisé en ce que le ruban encreur (4) passe sur un ou plusieurs rouleau(x) oscillant(s) (1) qui peut ou peuvent osciller autour d'un centre de rotation (10) entre deux butées (11, 12), en ce que le rouleau oscillant (1) est disposé de façon que son axe s'étende à peu près parallèlement à la direction de circulation du support de caractères sans fin et que son extrémité oscillante libre soit dirigée dans le sens de la circulation de ce support de caractères sans fin, en ce que le rouleau oscillant (1) oscille dans le sens de l'avance du ruban encreur jusqu'à la butée (11 ou 12) sous l'effet du contact avec le ruban encreur (4), en ce que le rouleau oscillant (1) peut alternativement tourner librement sous l'effet du contact avec le ruban encreur en mouvement, et, en ce que pour la compensation d'un déport latéral (LS) du ruban encreur (4) dans le sens de la circulation du support de caractères sans fin, sous l'effet de l'opération d'impression, une composante de force en sens inverse du déport latéral (LS) soit exercée sur le ruban par la rotation du rouleau oscillant (1).

2. Dispositif selon la revendication 1, caractérisé en ce que le rouleau oscillant (1) est agencé de façon à constituer en même temps un rouleau de renvoi à proximité de la région d'impression.

FIG. 1